# EUROPEAN PATENT APPLICATION

(11) **EP 1 954 051 A1**
(43) Date of publication of application: **06.08.2008**
(21) Application number: 07250436.8
(22) Date of filing: 02.02.2007
(51) Int. Cl.: H04N 7/173

(54) **Chat rooms for television**

(71) Applicant: Lucent Technologies Inc., Murray Hill, New Jersey 07974-0636 (US)
(72) Inventor: Mills, Cindy A., Galena, OH 43021 (US); Stoops, Daniel S., Galena, OH 43021 (US)
(74) Representative: Cockayne, Gillian

(57) **Abstract**

A processor (22) receives a televised programming signal from a source (30) of televised programming. The processor (22) also receives a signal indicating chat room content from a chat room facility (40). The processor (22) associates a visual representation of the chat room communication with a televised visual image so that the two can be simultaneously displayed on a display device (24). A disclosed example allows for various individuals to communicate using a chat room facility (40) and to simultaneously observe the communications within the chat room while watching televised programming, using a single display device (24).

## Description

### Field of the Invention

This invention generally relates to televised programming. More particularly, this invention relates to televised programming associated with a chat room.

### Description of the Related Art

Televised programming has become popular around the globe for entertainment and information purposes. Recently, programs have included viewer participation through phone-in voting for example. Program providers are always striving for ways to enhance a viewer's experience to increase ratings, for example.

Chat rooms have also become very popular over the internet. It is known to provide chat room facilities that allow various individuals to use computers, for example, to send messages to each other to "chat" over the internet. A chat room typically provides an essentially "live" display of typed-in comments from those participating in the chat room. There are various known chat rooms and themes or activities around which they are established.

It would be beneficial to provide enhanced chat room functionality. It would also be beneficial to provide enhanced television viewing experiences. This invention provides a unique combination of such technologies, which provides both such benefits.

### SUMMARY OF THE INVENTION

An exemplary method of communicating includes associating a visual representation of a chat room communication with a televised visual image for simultaneously displaying the associated visual representation and the televised visual image on a single display device.

In one example, the visual representation of the chat room communication is superimposed over the televised visual image. Some example arrangements allow a user to select where the visual representation of the chat room communication appears relative to the televised visual image on a display device.

One example includes receiving various types of chat room communication signals such as text, visual images or sound. A processor processes the signals to associate them with a televised visual image so that the chat room communications can be observed along with the televised programming on a single display device.

One of the benefits of such an arrangement is that it integrates a chat room experience with a televised programming experience in a manner that does not require an individual to separately monitor a chat room on a computer and televised programming on a television monitor, for example. Another advantage to such an arrangement is that it allows for enhanced viewing experiences regarding programming that incorporates viewer feed back. Another advantage is that an individual need not use a computer (as commonly used for chat room participation) to participate in a chat room. Still another advantage is that an individual watching televised programming can see a message from someone trying to communicate with them on the same display that is used for watching the programming.

The various features and advantages of this invention will become apparent to those skilled in the art from the following detailed description. The drawing that accompanies the detailed description can be briefly described as follows.

### BRIEF DESCRIPTION OF THE DRAWINGS

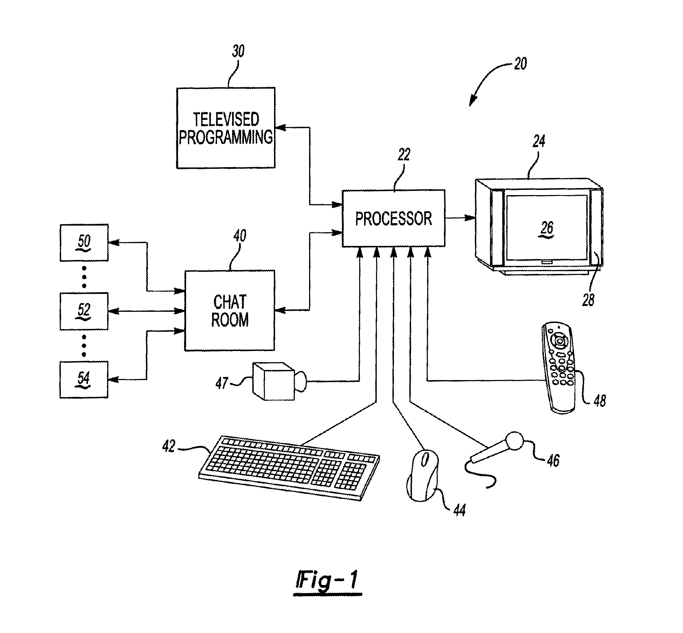

Figure 1 schematically illustrates selected portions of a communication system designed according to an embodiment of this invention.

### DETAILED DESCRIPTION

This invention includes associating a chat room feed with a televised programming feed to provide a combined experience for an individual watching television, for example.

Figure 1 schematically shows an example system 20 for communicating various types of information or programming to an individual through a single display device, for example. A processor 22 receives and processes signals and provides a video and audio feed to a display device 24. In this example, the display device 24 comprises a television monitor having a display screen 26 and speakers 28 for providing visual and audio output, respectively.

The example processor 22 receives signals indicative of televised programming from a televised programming source 30. Known techniques for receiving and processing such signals are used in one example to ultimately generate an appropriate visual display and audible output so that an individual can observe the televised programming as desired.

The processor 22 in this example also receives signals from a chat room facility 40. The processor 22 in one example receives such signals and processes them to provide an appropriate video feed, for example, to the display device 24 so that a chat room communication corresponding to the received signals can be seen visually or heard audibly through the display device 24, depending on the type of chat room communication signal that is received. Known techniques for converting textual and audio input into a video feed are used in one example.

The example processor 22 associates a visual representation of a chat room communication from the chat room facility 40 with a televised visual image (e.g., programming) so that the visual representation and the visual image can be displayed simultaneously using the display device 24. In one example, the processor 22 superimposes the visual representation of the chat room communication onto the visual image of the televised programming. In another example, the processor 22 communicates with a plurality of displays so that the visual representation may be displayed on one device and the visual image on another, for example.

In one example, the processor 22 is a portion of a so-called set top box that acts as a receiver or filter used for satellite TV or cable TV reception. In one particular example, the processor 22 is a portion of a set top box that acts as a receiver or filter used for IP TV through a DSL or cable TV connection. Added functionality is provided to facilitate the association of the chat room information with the televised visual image. Given this description, those skilled in the art will be able to select appropriate components, custom design hardware, software or both or to use a combination of custom-designed and existing components to realize a processor 22 that provides the benefits of the illustrated example and meets the needs of their particular situation.

One example allows an individual to select how and where the visual representation of the chat room communication is superimposed onto the display of the televised visual image. One example includes a known technique for arranging the different visual feeds provided by the processor 22 onto the display screen 26 according to an individual's desires.

The example processor 22 also receives input from an individual observing the display device 24. Example input devices include a keyboard 42, a pointer device such as a so-called mouse 44, a microphone 46, a video camera 47 and a remote control 48. Any of the input devices 42-48 can be used by an individual to indicate a desired chat room. The processor 22 receives such a communication and forwards it to the chat room facility 40. In one example, the processor 22 is configured to forward any chat room communication from the input devices 42-48 to the chat room facility 40 where the communication is incorporated into the chat room communications using known techniques. The chat room 40 then provides signals to the processor 22 that will include the communication received from at least one of the input devices 42-48. The processor 22 can then convert that into a visual feed along with other chat room communication signals for display on the display device 24. The contents of the chat room are displayed in an order corresponding to a timing of receipt by the chat room facility 40 in one example.

In another example, the processor 22 also processes the chat room communication input from at least one of the input devices 42-48 and converts it into a video feed for displaying that communication on the display device. This example allows an individual to see their contribution to the chat room and edit it as desired before submitting it for public viewing.

The illustrated example includes a variety of sources of chat room communications. A chat room facility 40 receives chat room communications from a computer 50, another processor 52 like the processor 22 although in a different location and a mobile station 54 such as a wireless telephone or personal digital assistant. The chat room facility 40 in this example processes received signals from all such devices to generate a stream of chat room communications that may include text, audio, other visual images or multimedia data, for example. The processor 22 and, in some cases, the other sources 50-54 receive a stream of chat room communication signals from the chat room facility 40 for associating that with the televised visual images from the televised programming source 30.

The illustrated example allows an individual to superimpose an intended chat room communication onto a televised visual image by using the pointer device 44, for example, to highlight a portion of a displayed visual image on the display screen 26. In one example, this works similar to a computer-based drawing program where the pointer device 44 is used to draw lines or shapes that appear on the display screen. In this example, the processor 22 provides information or signals to the chat room facility 40 such that other participants in the chat room can see the markings on their own display device received from another participant of the chat room. This can allow one individual, for example, to point to a particular aspect of a displayed visual image and to provide audio or textual commentary regarding that portion of the image to other participants of the chat room.

Another feature of the illustrated example is that it allows for additional capabilities in providing televised programming. It has recently become popular to have televised programming where the general public participates in a voting process, for example, that determines an outcome of the program. The illustrated example allows for such communications to occur using a chat room facility so that individuals' opinions or votes are displayed on a display device simultaneous with a display of the televised programming. In other words, the illustrated example allows for incorporating a live chat room feed into televised programming so that viewers can see the contribution of other individuals and their own contribution to such a process while watching the program in which they are participating.

In one example, the televised programming source 30 and the chat room facility 40 are independently owned and operated. In another example, the chat room facility 40 is provided by the source 30 of the televised programming. Given this description, those skilled in the art will realize how to arrange cooperative relationships between chat room providers and televised programming providers to meet the needs of a particular situation.

One significant advantage to the illustrated example is that it eliminates the requirement for an individual to have two separate machines for participating in a chat room and watching televised programming. Another advantage is that it allows individuals to have an enhanced viewing experience especially when their chat room participation has an influence on the programming that they are viewing.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. A method of communicating, comprising:
associating a visual representation of a chat room communication with a televised visual image for simultaneously displaying the associated visual representation and the televised visual image on a single display device.

2. The method of claim 1, comprising
allowing a user to select where the visual representation appears relative to the televised visual image on the display device.

3. The method of claim 1, comprising:
receiving at least one signal indicative of the televised visual image from a first source;
receiving at least one signal indicative of the chat room communication from a second source; and
processing the received at least one signals to associate the visual representation of the chat room communication with the televised visual image.

4. The method of claim 3, comprising
receiving at least one of a plurality of types of signals indicative of at least a portion of the chat room communication from the second source, wherein the plurality of types of signals includes text, drawing, sound or a preset image.

5. The method of claim 3, wherein there are a plurality of the second sources located remotely from each other and comprising
associating a visual representation of a chat room communication from each of the second sources with the televised visual image.

6. The method of claim 5, comprising
presenting the visual representation of each chat room communication in an order corresponding to an order in which each communication is received by a chat room facility.

7. The method of claim 5, comprising
selectively filtering chat room communications to accomplish at least one of
displaying only communications from at least one selected source or
preventing communications from at least one selected source.

8. The method of claim 1, comprising
associating audio signals corresponding to the chat room communication with the visual representation.

9. A communication device, comprising:
a processor that is configured to receive a first signal indicative of a televised visual image and a second signal indicative of a chat room communication, the processor associates the televised visual image with a visual representation of the chat room communication such that the televised visual image and the visual representation can be simultaneously displayed on a single display device.

10. The communication device of claim 9, comprising
a user input device that allows a user to generate at least one type of signal indicative of a chat room communication for display with a televised visual image and wherein the user input device comprises at least one of a keyboard, a pointer, a microphone or a switch.
